# EUROPÄISCHE PATENTSCHRIFT

(11) **EP 1 353 784 B1**
(45) Veröffentlichungstag und Bekanntmachung des Hinweises auf die Patenterteilung: **21.02.2007**
(21) Anmeldenummer: 01984695.5
(22) Anmeldetag: 12.12.2001
(51) Int. Cl.: B28D 1/04, B23Q 11/10, B23D 59/02, B23B 51/06

(54) **SCHNEIDWERKZEUG**
CUTTING TOOL
OUTIL DE COUPE

(30) Priorität: 15.01.2001 DE 10101451
(43) Veröffentlichungstag der Anmeldung: 22.10.2003
(73) Patentinhaber: ROBERT BOSCH GMBH, 70442 Stuttgart (DE)
(72) Erfinder: BERGER, Guenther DI, (DE); CHOMIENNE, Stephane, 70469 Stuttgart (DE)
(74) Vertreter: Daub, Thomas
(86) Internationale Anmeldenummer: PCT/DE2001/004664
(87) Internationale Veröffentlichungsnummer: WO 2002/055276

(56) Entgegenhaltungen:
- DE-A- 3 841 871
- US-A- 4 757 645
- US-A- 4 911 253
- DATABASE WPI Section PQ, Week 198140 Derwent Publications Ltd., London, GB; Class P56, AN 1981-K3558D XP002198990 -& SU 795 883 A (ZAITSEV V P), 15. Januar 1981 (1981-01-15)
- PATENT ABSTRACTS OF JAPAN vol. 001, no. 078 (M-027), 25. Juli 1977 (1977-07-25) -& JP 52 023780 A (TOKICO LTD), 22. Februar 1977 (1977-02-22)

## Beschreibung

### Stand der Technik

Die Erfindung geht aus von einem Schneidwerkzeug nach dem Oberbegriff des Anspruchs 1, (siehe z.B. US-A-4 911 253).

Es sind Diamantbohrkronen und Fliesenschneidwerkzeuge bekannt, die einen in einer Werkzeughalterung einer Werkzeugmaschine einspannbaren und rotierend antreibbaren Grundkörper und einen mit Diamanten besetzten Schneidkopf aufweisen. Der Grundkörper und der Schneidkopf sind unlösbar miteinander verbunden.

Beim Arbeiten mit einer Werkzeugmaschine, beispielsweise beim Bohren, Meißeln, Schleifen, Sägen, Fräsen usw., entsteht durch Reibung im Arbeitsbereich Wärme. Um eine Überhitzung und einen dadurch bedingten erhöhten Verschleiß und/oder eine Beschädigung eines Werkzeugs sowie eine Beschädigung eines zu bearbeitenden Gegenstands zu vermeiden, ist bekannt, mit einer Vorrichtung den Arbeitsbereich mit Wasser zu spülen. Beim Bohren von Beton oder Gestein kommen dabei sogenannte Naß-Bohrkronen zum Einsatz.

Ferner ist aus der Druckschrift DE 38 41 871 A1 ein Werkzeug zum Bohren von Löchern in Mauerwerk oder Beton bekannt, wobei ein Grundkörper und ein Hohlbohrer von separaten Bauteilen gebildet sind, die über eine Gewindeverbindung miteinander verbunden sind. Zur Kühlung des Bohrkopfs steht ein offenes Kühlsystem zur Verfügung. Hierbei wird mittels eines Staubsaugers innerhalb des Werkzeugs ein Unterdruck erzeugt, der zur Luftansaugung am Bohrkopf führt und durch den erzeugten Luftstrom sowohl zur Kühlung als auch zur Entfernung von Bohrstaub und Bohrresten beiträgt.

### Vorteile der Erfindung

Die Erfindung geht aus von einem Schneidwerkzeug, insbesondere einem Fliesenschneidwerkzeug, mit einem in einer Werkzeughalterung einer Werkzeugmaschine, insbesondere einer Handwerkzeugmaschine, befestigbaren und rotierend antreibbaren Grundkörper und mit einem mit Schneidpartikeln besetzten Schneidkopf, wobei zumindest der Schneidkopf und der Grundkörper von separaten Bauteilen gebildet sind und das den Schneidkopf bildende Bauteil über eine lösbare Verbindung mit dem Grundkörper verbindbar und auswechselbar ausgeführt ist.

Es wird vorgeschlagen, daß der Grundkörper einen Behälter zur Aufnahme von Kühlmitteln aufweist und der Behälter einen nach außen gasdicht verschlossenen Raum begrenzt. Mit der Möglichkeit den Schneidkopf vom Grundkörper zu trennen, kann bei einem verschlissenen und/oder defekten Schneidkopf dieser separat gewechselt werden, ohne daß der Grundkörper ausgetauscht werden muß. Der Grundkörper kann mehrfach genutzt und Kosten können eingespart werden, und zwar insbesondere bei kostenintensiven, hochwertigen Grundkörpern. Ferner ist möglich, einen Grundkörper für mehrere verschiedene Schneidköpfe zu verwenden. Durch die Wahl der Schneidpartikel, deren Bindung am Schneidkopf, deren Anzahl und deren Qualität kann gezielt auf spezielle Kundenwünsche eingegangen werden. Der Schneidkopf kann dabei farblich entsprechend gekennzeichnet werden. Ferner kann ein Schnittdurchmesser durch Auswechseln des Schneidkopfs schnell geändert werden.

Vorteilhaft ist die lösbare Verbindung von einer Gewindeverbindung gebildet. An den Schneidkopf und an den Grundkörper können konstruktiv einfach und kostengünstig Gewinde angeformt werden, die in ihrem Überlappungsbereich eine große Kontaktfläche zueinander aufweisen und einen großen Wärmestrom vom Schneidkopf über die Kontaktfläche zum Grundkörper ermöglichen. Um ein unbeabsichtigtes Lösen der Gewindeverbindung zu vermeiden, können der Schneidkopf und der Grundkörper über einen Formschluß in axialer und/oder in Umfangsrichtung gesichert sein, beispielsweise über einen Formschluß mit einem separaten, stiftähnlichen Bauteil usw. Zur Verbindung des Schneidkopfs mit dem Grundkörper können auch andere, dem Fachmann als sinnvoll erscheinende kraft- und/oder formschlüssige Verbindungen vorgesehen werden, wie z.B. Klemmverbindungen, Rastverbindungen usw.

Vorteilhaft ist an den Schneidkopf ein Innengewinde angeformt, das mit einem korrespondierenden Außengewinde am Grundkörper in Eingriff gebracht werden kann. Mit einem Innengewinde am Schneidkopf kann eine große Außenfläche des Schneidkopfs erreicht werden, über die die beim Schneidvorgang entstehende Wärme nach außen vorteilhaft abführbar ist. Ferner kann insbesondere der Grundkörper vorteilhaft geschützt im Innengewinde des Schneidkopfs angeordnet werden.

Weist der Schneidkopf einen Kern mit gut leitendem Metall auf, wie z.B. Kupfer, kann die Wärme besonders vorteilhaft vom Schneidkopf zum Grundkörper abgeführt werden. Es kann eine hohe Lebensdauer erreicht und Kosten können reduziert werden.

Besonders vorteilhaft ist der Grundkörper aus einem Behälter zur Aufnahme von Kühlmittel gebildet. Grundkörper ohne integriertes Kühlsystem sind in der Regel kostengünstiger als Grundkörper mit Kühlsystem, wodurch die erfindungsgemäße Lösung mit dem auswechselbaren Schneidkopf sich besonders für letztere, hochwertige Grundkörper eignet. Die hochwertigen Grundkörper mit offenen und geschlossenen Kühlsystemen können vorteilhaft mehrfach verwendet werden.

Bei einem entsprechenden Grundkörper kann eine beim Schneiden entstehende Wärme über die lösbare Verbindung an das im Behälter befindliche Kühlmittel abgegeben werden. Eine starke Erwärmung des Schneidkopfs kann vermieden und die Lebensdauer kann erhöht werden.

Ferner wird vorgeschlagen, daß der Behälter einen nach außen gasdicht verschlossenen Raum begrenzt. Es kann eine vorteilhafte Kühlung des Werkzeugs von innen erreicht und ein Kontakt des Kühlmittels mit einer Bearbeitungsstelle vermieden werden. Mit dem geschlossenen Raum kann ein geschlossenes, sauberes und insbesondere für elektrische Handwerkzeugmaschinen geeignetes System zur Wärmeabfuhr aus dem Bereich der Arbeitsfläche erreicht und eine thermische Überlastung verhindert werden. Pumpen und Kühlkreisläufe sowie ein besonderer Schutz von elektrischen Bauteilen vor dem Kühlmittel können im Vergleich zu offenen Systemen vermieden werden. Es können trotz einer guten Wärmeabfuhr aus dem Bereich der Arbeitsfläche kostengünstige Werkzeuge geschaffen werden, die in Standardmaschinen verwendet werden können. Der Raum kann durch verschiedene, dem Fachmann als sinnvoll erscheinende Konstruktionen dicht verschlossen sein, beispielsweise durch einen Deckel und/oder durch ein oder mehrere Sicherheitsventile, die öffnen, bevor das Werkzeug durch einen Überdruck zerstört wird.

Ist der Aggregatzustand des Kühlmittels während eines Arbeitsprozesses zumindest teilweise durch eine auftretende Wärmeenergie veränderbar, kann die Aggregatzustandsänderung besonders vorteilhaft zur Wärmeabfuhr aus dem Bereich der Arbeitsfläche genutzt werden.

Als Kühlmittel können verschiedene, dem Fachmann als sinnvoll erscheinende feste, pastenförmige oder flüssige Materialien verwendet werden. Besonders vorteilhaft ist das Kühlmittel jedoch von einer Flüssigkeit gebildet, die während eines Arbeitsprozesses zumindest teilweise verdampfbar ist. Um einen vorteilhaften Verdampfungsprozeß zu erreichen und einen unerwünschten Überdruck zu vermeiden, ist der Raum vorzugsweise nur zu einem Teil mit der Flüssigkeit und zu einem Teil mit einem Gas gefüllt. Der Gasanteil kann beim Verdampfen des Wassers zusammengedrückt werden. Das Werkzeug verhält sich wie ein Druckkessel mit hohen Drücken, beispielsweise bis zu 100 bar bei 300°C, auf die das Werkzeug ausgelegt werden muß. Die auftretenden Drücke können leicht durch Dampfdruckkurven bestimmt werden. Möglich ist jedoch auch, eine Begrenzungswand des Raums gezielt elastisch verformbar auszuführen.

Verdampft die Flüssigkeit an einer Fläche im Raum im Bereich einer Arbeitsfläche, breitet sich der Dampf über den Raum schnell aus und führt die Wärme vorteilhaft aus dem Bereich der Arbeitsfläche effektiv ab. Bei Wasserdampfung kann gegenüber Wassererwärmung eine höhere Wärmeenergie aufgenommen werden, und es kann ein großer Wärmestrom zu kühlen Bereichen hin erreicht werden, in denen der Wasserdampf kondensiert und Wasser zur Kühlung wieder zur Verfügung steht. Der Verdampfungsprozeß nimmt proportional zur Verdampfungsenthalpie des Kühlmediums Energie auf.

Ist stets zumindest ein Teil des Kühlmittels während eines Arbeitsprozesses in einem flüssigen Zustand, kann ferner eine auf die Flüssigkeit wirkende Fliehkraft genutzt werden, so daß zumindest eine Fläche des Raums im Bereich der Arbeitsfläche stets mit der Flüssigkeit bedeckt ist. Wärmestaus durch Gasblasen können sicher vermieden werden. Ferner kann durch eine Verwirbelung des Wassers während des Betriebs des Werkzeugs eine zusätzliche Wärmeabfuhr an kühle Bereiche und eine zusätzliche Kühlwirkung erreicht werden. Alternativ oder ergänzend zur Rückführung vom flüssigen Wasser durch die wirkende Fliehkraft zum Arbeitsbereich sind ein oder mehrere, den Kapillareffekt nutzende Elemente im Grundkörper denkbar, über die das Wasser zurückgeführt werden kann.

Ein sich im Betrieb einstellendes Gleichgewicht zwischen flüssigem und dampfförmigem Kühlmittel kann durch verschiedene Parameter beeinflußt werden, wie beispielsweise durch Wahl einer Flüssigkeit mit einer bestimmten Siedetemperatur, durch die Menge der eingebrachten Flüssigkeit, durch einen bestimmten Druck im Raum im abgekühlten Zustand usw. Um zu erreichen, daß das Kühlmittel bereits bei niedrigen Temperaturen verdampft, und um bei einer niedrigen Temperatur den Effekt des Wechsels des Aggregatzustands nutzen zu können, wird vorteilhaft eine Flüssigkeit mit einer niedrigen Siedetemperatur verwendet, wie beispielsweise Alkohol. Um bei dem Verdampfungsprozeß möglichst viel Energie abführen zu können, wird vorteilhaft eine Flüssigkeit mit hoher Verdampfungsenthalpie verwendet, wie beispielsweise Wasser.

In einer Ausgestaltung der Erfindung wird vorgeschlagen, daß das Kühlmittel von Wasser gebildet und ein Teil des Raums mit Luft gefüllt ist. Das Werkzeug kann dadurch besonders kostengünstig und einfach hergestellt werden. Ferner können mit einer Wasser-Luft-Füllung Umweltbelastungen, beispielsweise bei einem Defekt des Werkzeugs, sicher vermieden werden.

Ist der Raum zwischen zumindest einem Innenrohr und einem Außenrohr angeordnet, kann das Werkzeug leicht, stabil und kostengünstig hergestellt werden. Ferner kann insbesondere bei Diamantbohrern konstruktiv einfach im radial inneren Bereich ein gewünschter Freiraum geschaffen werden. Die Rohre können durch verschiedene, dem Fachmann als geeignet erscheinende Verbindungsverfahren verbunden werden, wie beispielsweise Laserschweißen, Löten, Kleben usw. Besonders vorteilhaft werden die Rohre und/oder zusätzliche andere Bauteile in einem gemeinsamen Verfahrensschritt miteinander verbunden und möglicherweise gleichzeitig die Schneidpartikel am Werkzeug befestigt, beispielsweise indem Kontaktstellen mit einem Lot beschichtet und anschließend die Teile in einem Ofen fest verbunden werden.

Ferner ist vorteilhaft ein den Raum verschließendes Bauteil rotationssymmetrisch an einem in der Werkzeughalterung befestigbaren bzw. einspannbaren Schaftende angeordnet. Am Schaftende ist das Bauteil im Betrieb vor äußeren Einflüssen geschützt, und insbesondere kann bei rotierenden Werkzeugen eine Unwucht durch das Bauteil sicher vermieden werden.

Das Bauteil kann durch verschiedene Verbindungen befestigt sein, beispielsweise durch eine Klebe-, Löt- oder Schweißverbindung usw. Wird das Bauteil über ein Gewinde befestigt, kann eine besonders kostengünstige, saubere und einfache Montage erreicht werden. Ist das Bauteil eine Schraube, kann diese zudem vorteilhaft dazu genutzt werden, den Schaft zu stabilisieren.

Ferner kann ein kostengünstiger und sicherer Verschluß des Raums mit einer eingepreßten Kugel erreicht werden. Mit einem sogenannten Kugelverschluß kann ein Befüllkanal mit einer kleinen Querschnittsfläche ausgeführt und Auswirkungen auf die Stabilität können weitgehend vermieden werden, beispielsweise auf einen Schaft des Grundkörpers. Ferner ist ein ungewünschtes Öffnen vermeidbar.

Vorteilhaft besitzt der Grundkörper zumindest in einem Bereich eine durch wenigstens eine Kühlrippe vergrößerte Oberfläche. Mit einer großen Oberfläche kann eine gute Wärmeabfuhr aus dem Raum nach außen erreicht werden. Daneben kann der Grundkörper mit einer Kühlluft angeströmt werden, beispielsweise mit einer Motorkühlluft einer Werkzeugmaschine.

Besitzt der Grundkörper einen Arbeitsbereich mit einer kleinen Querschnittsfläche bzw. mit einem kleinen Volumen, beispielsweise ein Grundkörper eines Bohrers oder eines Fliesenschneidwerkzeugs mit einem kleinen Durchmesser, so daß im Arbeitsbereich nur eine kleine Menge an Kühlmittel untergebracht werden kann, ist vorteilhaft in axialer Richtung vor dem Arbeitsbereich der Raum mit einer größeren Querschnittsfläche ausgeführt als im Arbeitsbereich. Es kann dadurch ein ausreichendes Raumvolumen für das Kühlmittel geschaffen werden. Es entsteht eine Art Vorratsraum für das Kühlmittel. Aus dem Vorratsraum kann über eine große Oberfläche Wärme vorteilhaft nach außen abgeführt werden, und zwar insbesondere bei hohen Drehzahlen.
Die erfindungsgemäße Lösung kann bei verschiedenen, dem Fachmann als sinnvoll erscheinenden Schneidwerkzeugen eingesetzt werden, und zwar bei Schneidwerkzeugen mit einer in Längsrichtung und/oder einer quer zur Längsrichtung des Werkzeugs verlaufenden Bearbeitungsrichtung. Besonders vorteilhaft ist die erfindungsgemäße Lösung jedoch bei Fliesenschneidwerkzeugen einsetzbar, die in der Regel eine quer zur Längsrichtung des Werkzeugs verlaufende Bearbeitungsrichtung aufweisen. Trotz geteiltem Schneidkopf und Grundkörper kann eine vorteilhafte Kühlung der Seitenflächen des Schneidkopfs erreicht werden.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibungen und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine vergrößerte Darstellung eines Längsschnitts durch einen Schneidkopf,
- Fig. 2: eine Draufsicht auf einen Grundkörper,
- Fig. 3: einen Schnitt entlang der Linie III-III in Fig. 2,
- Fig. 4: eine Draufsicht auf ein Verschlußteil des Grundkörpers,
- Fig. 5: einen Schnitt entlang der Linie V-V in Fig. 4 und
- Fig. 6: einen Schnitt durch den Schneidkopf und den Grundkörper im montierten Zustand.

### Beschreibung des Ausführungsbeispiels

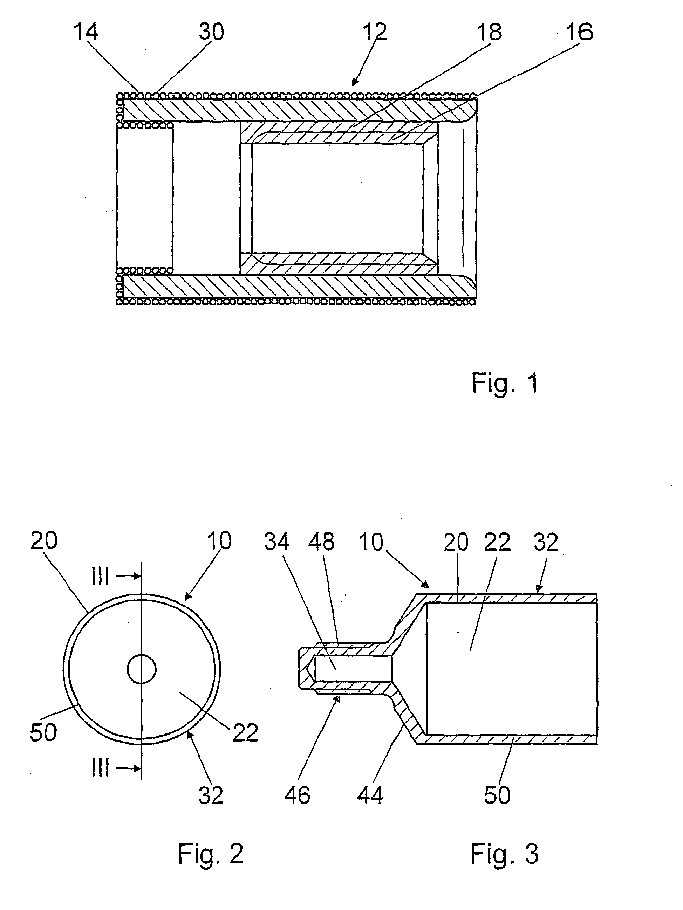

Fig. 1 zeigt einen von einem Sinterbauteil gebildeten Schneidkopf 12 eines Fliesenschneidwerkzeugs 28 mit einer Arbeitsfläche 30, die mit Schneidpartikeln 14 versehen ist, und zwar mit Diamanten in einem Sintervorgang.

Der Schneidkopf 12 weist einen eingepreßten Kern 18 aus Kupfer auf. In den Kern 18 ist ein Innengewinde 16 eingebracht, über das der Schneidkopf 12 auf ein Außengewinde 48 eines Aufnahmebereichs 46 eines Grundkörpers 10 des Fliesenschneidwerkzeugs 28 aufgeschraubt werden kann (Fig. 1, 2, 3 und 6). Ist der Schneidkopf 12 verschlissen, kann dieser einfach vom Grundkörper 10 abgeschraubt und ausgewechselt werden.

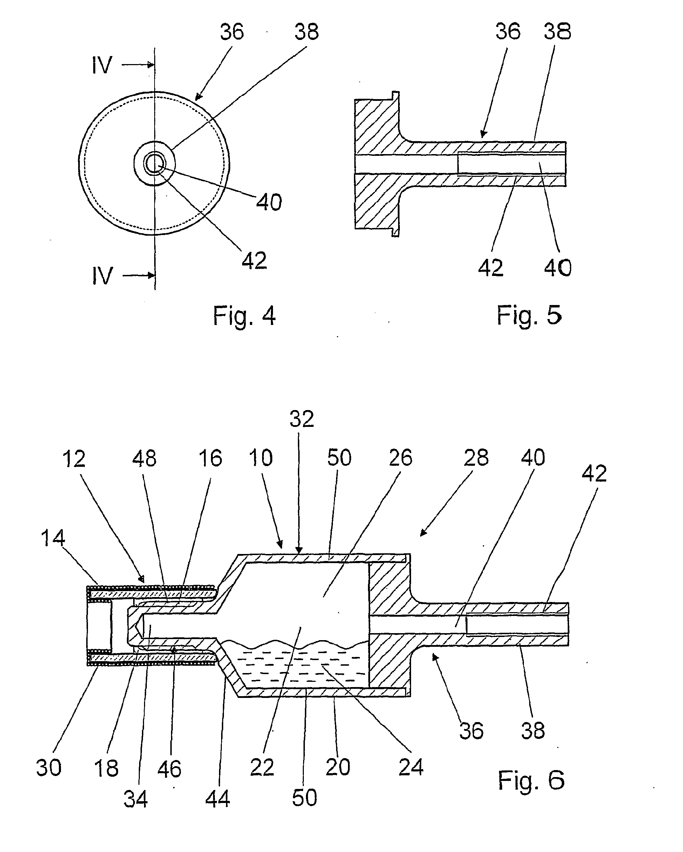

Der Grundkörper 10 ist von einem Behälter 20 zur Aufnahme von Kühlmittel 24 gebildet und besitzt ein erstes Bauteil 32, das einen Raum 22 bildet, und ein zweites Bauteil, das ein Verschlußteil 36 für den Raum 22 bildet (Fig. 2 bis 5). Das Verschlußteil 36 kann in das erste Bauteil 32 eingepreßt und durch Löten mit diesem stoffschlüssig verbunden werden (Fig. 6).

Das den Raum 22 bildende Bauteil 32 weist an einer dem Schneidkopf 12 zugewandten Seite eine Verjüngung 44 auf, an die sich in Richtung des Schneidkopfs 12 der Aufnahmebereich 46 mit dem Außengewinde 48 anschließt. Vor der Verjüngung 44 besitzt das Bauteil 32 einen im Verhältnis zum Schneidkopf 12 großen Durchmesser, wodurch ein vorteilhaft großes Raumvolumen für das Kühlmittel 24 erreicht werden kann. Es sind jedoch auch Schneidwerkzeuge denkbar, deren Grundkörper den gleichen Durchmesser wie der Schneidkopf oder einen kleineren Durchmesser als der Schneidkopf aufweisen.

Die Verjüngung 44 bildet zudem eine axiale Anschlagfläche für den. Schneidkopf 12. Der bolzenförmige Aufnahmebereich 46 ist hohl ausgeführt, und zwar ist in das Bauteil 32 von dem dem Schneidkopf 12 abgewandten Ende in Richtung Schneidkopf 12 eine Bohrung 34 eingebracht. Aus dem Aufnahmebereich 46 kann dadurch über das Kühlmittel 24 vorteilhaft Wärme abgeführt werden.

An das Verschlußteil 36 ist in axialer Richtung an der dem Schneidkopf 12 abgewandten Seite ein Schaft 38 mit einer konzentrischen Bohrung 40 angeformt. Mit dem Schaft 38 kann der Grundkörper 10 in einer Werkzeughalterung einer nicht näher dargestellten Handwerkzeugmaschine eingespannt und rotierend angetrieben werden. In die Bohrung 40 ist auf der dem Schneidkopf 12 abgewandten Seite ein Innengewinde 42 eingebracht, in das eine nicht näher dargestellte Schraube mit einer Dichtscheibe eingeschraubt und der Raum 22 gasdicht verschlossen werden kann (Fig. 4 und 5).

Das Kühlmittel 24 ist Wasser, wobei ein Teil des Raums 22 mit Luft 26 gefüllt ist. Während eines Arbeitsprozesses wird das flüssige Kühlmittel 24 durch eine wirkende Fliehkraft radial nach außen an eine Wandung 50 des Raums 22 gedrückt. Durch die wirkende Kraft verteilt sich das Kühlmittel 24 über die Länge des Raums 22 und gelangt dadurch in die Bohrung 34 des Aufnahmebereichs 46 des Fliesenschneidwerkzeugs 28.

Wird durch eine Reibarbeit des Schneidkopfs 12 im vorderen Aufnahmebereich 46 des Raums 22 eine Siedetemperatur des Kühlmittels 24 erreicht, wobei die Bearbeitungsrichtung im wesentlichen quer zur Längsrichtung des Fliesenschneidwerkzeugs verläuft, verdampft das Kühlmittel 24 teilweise. Das verdampfte Kühlmittel 24 breitet sich über den Raum 22 aus und führt aus dem Bereich der Arbeitsfläche 30 Wärme ab. Das Mengenverhältnis Luft 26 zu Kühlmittel 24 ist in der Weise abgestimmt, daß stets zumindest ein Teil des Kühlmittels 24 während eines Arbeitsprozesses flüssig ist.

### Bezugszeichen

- 10: Grundkörper
- 12: Schneidkopf
- 14: Schneidpartikel
- 16: Innengewinde
- 18: Kern
- 20: Behälter
- 22: Raum
- 24: Kühlmittel
- 26: Luft
- 28: Fliesenschneidwerkzeug
- 30: Arbeitsfläche
- 32: Bauteil
- 34: Bohrung
- 36: Verschlußteil
- 38: Schaft
- 40: Bohrung
- 42: Innengewinde
- 44: Verjüngung
- 46: Aufnahmebereich
- 48: Außengewinde
- 50: Wandung

## Patentansprüche

1. Schneidwerkzeug, insbesondere Fliesenschneidwerkzeug, mit einem in einer Werkzeughalterung einer Werkzeugmaschine befestigbaren und rotierend antreibbaren Grundkörper (10) und mit einem mit Schneidpartikeln (14) besetzten Schneidkopf (12), wobei zumindest der Schneidkopf (12) und der Grundkörper (10) von separaten Bauteilen gebildet sind und das den Schneidkopf (12) bildende Bauteil über eine lösbare Verbindung mit dem Grundkörper (10) verbindbar und auswechselbar ausgeführt ist, **dadurch gekennzeichnet, dass** der Grundkörper (10) einen Behälter (20) zur Aufnahme von Kühlmittel (24) aufweist, wobei der Behälter (20) einen nach außen gasdicht verschlossenen Raum (22) begrenzt.

2. Schneidwerkzeug nach Anspruch 1, **dadurch gekennzeichnet, daß** die lösbare Verbindung von einer Gewindeverbindung gebildet ist.

3. Schneidwerkzeug nach Anspruch 2, **dadurch gekennzeichnet, daß** der Schneidkopf (12) ein Innengewinde (16) aufweist.

4. Schneidwerkzeug nach einem der vorhergehenden Ansprüche, **dadurch gekennzeichnet, daß** der Schneidkopf (12) einen Kern (18) aus einem gut wärmeleitenden Metall aufweist.

5. Schneidwerkzeug nach Anspruch 1, **dadurch gekennzeichnet, daß** der Aggregatzustand des Kühlmittels (24) während eines Arbeitsprozesses zumindest teilweise durch eine auftretende Wärmeenergie veränderbar ist.

6. Schneidwerkzeug nach Anspruch 5, **dadurch gekennzeichnet, daß** das Kühlmittel (24) von einer Flüssigkeit gebildet ist, die während eines Arbeitsprozesses zumindest teilweise verdampfbar ist.

7. Schneidwerkzeug nach Anspruch 6, **dadurch gekennzeichnet, daß** stets zumindest ein Teil des Kühlmittels (24) während eines Arbeitsprozesses einen flüssigen Zustand aufweist.

8. Schneidwerkzeug nach Anspruch 7, **dadurch gekennzeichnet, daß** das Kühlmittel (24) von Wasser gebildet und ein Teil des Raums (22) mit Luft.(26) gefüllt ist.

9. Schneidwerkzeug nach einem der vorhergehenden Ansprüche, **dadurch gekennzeichnet, dass** der Grundkörper (10) zumindest eine größere Querschnittsfläche senkrecht zu einer Drehachse des Schneidwerkzeugs aufweist als eine Querschnittsfläche des Schneidkopfs (12).

## Claims

1. Cutting tool, in particular tile-cutting tool, with a basic body (10) capable of being fastened in a tool holder of a machine tool and capable of being driven in rotation and with a cutting head (12) equipped with cutting particles (14), at least the cutting head (12) and the basic body (10) being formed by separate components, and the component which forms the cutting head (12) being designed so as to be connectable to the basic body (10) and exchangeable via a releasable connection, **characterized in that** the basic body (10) has a container (20) for the reception of coolant (24), the container (20) delimiting a space (22) closed so as to be outwardly gas-tight.

2. Cutting tool according to Claim 1, **characterized in that** the releasable connection is formed by a threaded connection.

3. Cutting tool according to Claim 2, **characterized in that** the cutting head (12) has an internal thread (16).

4. Cutting tool according to one of the preceding claims, **characterized in that** the cutting head (12) has a core (18) consisting of metal having high thermal conductivity.

5. Cutting tool according to Claim 1, **characterized in that** the state of aggregation of the coolant (24) can be varied at least partially during a work process by means of heat energy which occurs.

6. Cutting tool according to Claim 5, **characterized in that** the coolant (24) is formed by a liquid which is at least partially evaporable during a work process.

7. Cutting tool according to Claim 6, **characterized in that** always at least part of the coolant (24) is in the liquid state during a work process.

8. Cutting tool according to Claim 7, **characterized in that** the coolant (24) is formed by water and part of the space (22) is filled with air (26).

9. Cutting tool according to one of the preceding claims, **characterized in that** the basic body (10) has at least one larger cross-sectional area perpendicularly to an axis of rotation of the cutting tool than a cross-sectional area of the cutting head (12).

## Revendications

1. Outil de coupe, notamment outil de coupe de dallage comprenant un corps de base (10) pouvant être fixé et entraîné en rotation dans un support d'outil d'une machine-outil, avec une tête de coupe (12) garnie de particules de coupe (14), cette tête (12) et le corps (10) étant composés d'éléments séparés, dont celui constituant la tête de coupe (12) est réalisé de manière à pouvoir être relié et échangé par l'intermédiaire d'une liaison séparable avec le corps de base (10),
**caractérisé en ce que**
le corps de base (10) présente un récipient (20) pour accueillir un agent de refroidissement (24), ce récipient délimitant un espace (20) fermé par rapport à l'extérieur avec étanchéité aux gaz.

2. Outil de coupe selon la revendication 1,
**caractérisé en ce que**
la liaison séparable est une liaison à vis.

3. Outil de coupe selon la revendication 2,
**caractérisé en ce que**
la tête de coupe (12) présente un filetage interne (16).

4. Outil de coupe selon une des revendications précédentes,
**caractérisé en ce que**
la tête de coupe (12) comporte un noyau (18) fait d'un matériau bon conducteur de la chaleur.

5. Outil de coupe selon la revendication 1,
**caractérisé en ce que**
l'état de la matière de l'agent de refroidissement (24) peut être modifié pendant un processus opératoire au moins en partie par la production d'une énergie calorifique.

6. Outil de coupe selon la revendication 5,
**caractérisé en ce que**
l'agent de refroidissement (24) est un liquide vaporisable au moins partiellement pendant un processus opératoire.

7. Outil de coupe selon la revendication 6,
**caractérisé en ce qu'**
au moins une partie de l'agent de refroidissement (24) présente un état liquide pendant un processus opératoire.

8. Outil de coupe selon la revendication 7,
**caractérisé en ce que**
l'agent de refroidissement (24) est de l'eau et une partie du volume (22) est rempli d'air (26).

9. Outil de coupe selon une des revendications précédentes,
**caractérisé en ce que**
le corps de base (10) présente une surface de coupe perpendiculaire à l'axe de rotation de l'outil de coupe plus grande que la surface de coupe de la tête de coupe (12).
